# EUROPÄISCHE PATENTANMELDUNG

(11) **EP 0 785 015 A1**
(43) Veröffentlichungstag der Anmeldung: **23.07.1997**
(21) Anmeldenummer: 97810010.5
(22) Anmeldetag: 10.01.1997
(51) Int. Cl.: B01D 45/14, B01D 50/00

(54) **Gasfilter zur Abscheidung von Partikeln aus einem Gasstrom**

(30) Priorität: 17.01.1996 CH 118/96
(71) Anmelder: Meyer, Ulrich R., 5702 Niederlenz (CH)
(72) Erfinder: Meyer, Ulrich R., 5702 Niederlenz (CH)
(74) Vertreter: Winkler, Kurt, Dr.

(57) **Zusammenfassung**

Das durch das Zuführungsrohr (1) zuströmende Gas trifft axial auf das motorisch angetriebene Radial-Gebläserad (5), durch das es in eine Drehbewegung versetzt wird. Die im Gas enthaltenen Partikel werden auszentrifugiert und nach aussen geschleudert. Sie treffen auf die Wandung des Gehäuse-Unterteils (2) und sinken durch ihr Eigengewicht in den Beruhigungsraum (17) ab, von wo sie in grösseren Zeitabständen entfernt werden.

Es lässt sich auch ein Nassreinigungsverfahren durchführen, indem durch das Zuleitungsrohr (19) eine Waschflüssigkeit zugeleitet wird, welche durch das Gebläserad (5) zu einem Nebel zerstäubt wird. Dieser vermischt sich mit dem Gas und wird zusammen mit den Partikeln ausgeschleudert. Die so erhaltene verunreinigte Waschflüssigkeit wird durch das Ableitungsrohr (20) abgeleitet.

Mit diesem Filter wird eine zumindest weitgehende Reinigung des verschmutzten Gases erzielt.

## Beschreibung

Die Erfindung betrifft einen Gasfilter zur Abscheidung von Partikeln, die in einem Gasstrom als Schwebeteilchen mitgeführt werden, insbesondere Feststoffpartikel im Abgas einer Feuerungsanlage.

Alljhährlich entstehen an Gebäuden und frei zugänglichen Gegenständen unermessliche Schäden durch den dauernden Feststoff- und Schwebestaubauswurf aus Kaminen und Feuerungsanlagen. Im Gegensatz zu den gasförmigen Verbrennungsprodukten in den Abgasen, welche durch die Vermischung mit der Umgebungsluft sehr rasch verdünnt werden, fallen die ascheähnlichen Teilchen in der näheren Umgebung zu Boden und werden bei Wind auch noch weiter vertragen. Die durch solche Ablagerungen verursachten Schäden machen sich hauptsächlich durch Verfärbung, erschmutzung, Korrosion und Zersetzung der davon betroffenen Gebäudeteile und Gegenstände unangenehm bemerkbar.

Der Feststoffauswurf, von welchem die grössten Schäden ausgehen, besteht vor allem aus mikrofeinen Eisenteilchen (Abrieb von Heizkesseln) sowie aus Schwefel- und Ascheteilchen verschiedenster chemischer Zusammenset aus Verbrennungsprozessen. Der Schwebestaubauswurf, zu welchem nebst Staub auch der feine, nicht unmittelbar sichtbare Russ gehört, wird in der Regel eher als Verschmutzung der weiteren Umgebung wahrgenommen.

Zur Vermeidung oder zumindest Verringerung von solchen Schäden wurden in der Vergangenheit bereits Verordnungen zum generellen Einbau von Abgasfiltern in Feuerungsanlagen ab einer bestimmten Grösse erlassen. Diese Verordnungen mussten allerdings wieder aufgehoben werden, weil sich die damals eingesetzten Filtermatten wegen des mit der Zeit stark zunehmenden Strömungswiderstandes nicht bewährten und kein anderer, tauglicher Filter zur Verfügung stand.

Aber auch in der Industrie werden oftmals Gasfilter benötigt, beispielsweise bei thermischen Einrichtungen, wenn ein Gasstrom mit dem zu kühlenden Material in direkte Berührung kommt und flüssige oder Feststoffteilchen mitreisst.

Der Erfindung liegt die Aufgabe zugrunde, einen Gasfilter zu schaffen, welcher einen Gasstrom durch Abscheidung der darin enthaltenen Partikel zumindest weitgehend reinigt. Für die durchgesetzten Gase darf durch den Strömumgswiderstand kein bleibender Druckverlust entstehen, denn der Unterdruck z.B. nach einem Heizkessel muss auch nach längerer Betriebszeit unverändert bleiben. Ferner soll der Filter bei möglichst kleinem Raumbedarf und durch einfache Bauart preisgünstig realisierbar sein.

Die Lösung der gestellten Aufgabe wurde darin gefunden, dass das zu reinigende Gas durch ein Zuführungsrohr einem teilweise darin versenkten, motorisch angetriebenen Radial-Gebläserad axial zuströmt, welches dem in einen Wirbelraum ausströmenden Gas eine Drehbewegung erteilt, wodurch die unter der Einwirkung der sich einstellenden Zentrifugalkraft nach aussen geschleuderten Partikel sich entlang der äusseren Wandung des Wirbelraumes konzentrieren und anschliessend zur Sammlung in einen Beruhigungsraum gelangen, während das gereinigte Gas durch ein Abzugsrohr abströmt.

Der sich ergebende Vorteil der Erfindung besteht insbesondere darin, dass mit einfachen Mitteln eine fast vollständige Reinigung des Gases erreicht wird. Bei Holzasche z.B. können selbst im Trockenreinigungsverfahren alle sichtbaren Schwebeteilchen zuverlässig abgesondert werden. Durch die unkomplizierte Konstruktion werden die Herstellungskosten tief gehalten, der Aufwand für den Betrieb und für die Wartung ist gering. Die Reinigung und der Unterhalt der gesamten Filteranlage kann in ein bis zwei Arbeitsgängen pro Jahr erledigt werden.

Mit einem Nassreingungsverfahren, für dessen Durchführung nur wenige Zusatzteile notwendig sind, lässt sich auch der sonst noch verbliebene mikrofeine Schwebestaub zuverlässig auswaschen. Ausserdem kann durch die Wahl der Waschflüssigkeit oder durch entsprechende Beimischungen die chemische Zusammensetzung des abströmenden Gases beeinflusst werden.

In der beigefügten Zeichnung sind Ausführungsbeispiele der Erfindung teils im Schnitt, teils in Ansicht schematisch dargestellt und werden anschliessend näher erläutert. Es zeigen:
- Fig.1: einen Filter mit unterschiedlicher Zu- und Abströmrichtung des Gases;
- Fig.2: einen Filter mit gleichgerichteter Zu- und Abströmung des Gases;
- Fig.3: einen Schnitt nach der Linie A - A in Fig.2;
- Fig.4: den gleichen Filter wie in Fig.2, jedoch mit einer Zusatzeinrichtung für eine Nassreinigung des Gases.

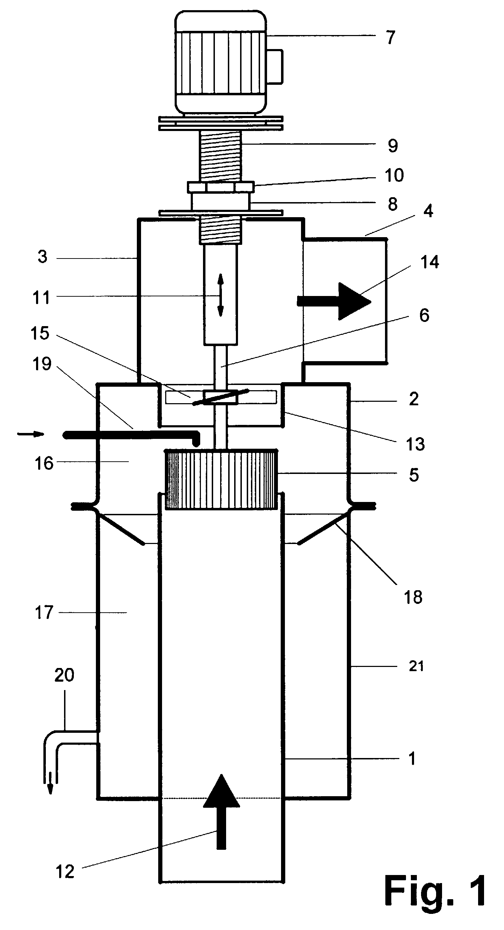

Der Filter nach Fig.1 ist für die Reinigung der Abgase einer Feuerungsanlage vorgesehen, doch sei ausdrücklich vermerkt, dass der selbe Filter ohne irgendeine bauliche änderung auch für die Reinigung von verschmutzten Gasen aus der chemischen Industrie oder für vergleichbare Zwecke eingesetzt werden kann. Bei der genannten Verwendung ist der Filter z.B. mit Briden in die Abgasleitung zwischen Heizkessel und Kamin eingebaut.

Das für die Abgasführung vorgesehene Zuführungsrohr 1 mündet innerhalb des Gehäuse-Unterteils 2 aus, auf den der Gehäuse-Oberteil 3 mit dem daran anschliessenden Abzugsrohr 4 aufgesetzt ist. In das Zuführungsrohr taucht das Radial-Gebläserad 5 teilweise ein, das über die Welle 6 vom Elektromotor 7 angetrieben wird. Dieser stützt sich auf dem Gehäuse-Oberteil mit dem Befestigungsflansch 8 ab, in welchem er mit Hilfe der Gewindespindel 9 verdrehbar und mit der Feststellmutter 10 fixierbar ist. Mit dem Verdrehen des Motors wird eine axiale Verstellung des Gebläserades 5 in der einen oder anderen Richtung erreicht, wie es durch den Doppelpfeil 11 angedeutet ist, und damit wird ein tieferes oder weniger tiefes Eintauchen des Gebläserades in das Zuführungsrohr 1 bewirkt.

Das Abgas, in der Zeichnung mit dicken Linien versinnbildlicht, strömt von unten in der Richtung des Pfeiles 12 axial in das Zuführungsrohr 1 ein und trifft auf das Radial-Gebläserad 5, welches eine gewisse Saugwirkung auf das zuströmende Abgas ausübt. Es übernimmt somit die Förderung des Abgases und versetzt dasselbe gleichzeitig in eine heftige Drehbewegung mit starker Zentrifugalwirkung, wodurch die darin enthaltenen Feststoffpartikel nach aussen geschleudert werden. Ihre Weiterbehandlung wird weiter unten dargelegt.

Das solcherart gereinigte Abgas strömt durch den Rohrstutzen 13, welcher eine Fortsetzung des Zuführungsrohres 1 bildet, in den Gehäuse-Oberteil 3 und von hier durch das Abzugsrohr 4 in Richtung des Pfeiles 14 weiter zum Kamin. Allfällige Strömungsverluste werden durch die Energiezufuhr im Gebläserad wieder wettgemacht, es können sogar die Strömungsverhältnisse für das Abgas noch verbessert werden. Durch die Möglichkeit der axialen Verstellung des Gebläserades lässt sich dessen Förderleistung an die betreffenden Gegebenheiten anpassen und so ein optimaler Betrieb erzielen.

Sollte es notwendig oder erwünscht sein, die Zugverhältnisse bis zum Kamin und in ihm noch weiter zu verbessern, so kann das Propellerrad 15 vorgesehen werden, welches auf der selben Welle wie das Gebläserad 5 angeordnet ist. Dabei ist es von Vorteil, wenn zur Anpassung an das Fördervolumen oder an die Strömungsverhältnisse die Schaufelblätter des Propellerrades verstellbar sind.

Das Ein- und Ausschalten des Gebläserades 5 erfolgt zweckmässigerweise zugleich mit dem Ein- und Ausschalten des (nicht gezeichneten) Brenners der Feuerungsanlage, um sicher zu sein, dass das Abgas ohne Rückstau durch den Filter befördert wird. Damit nicht nach dem Abschalten des Gebläserades ein Rest des Abgases im Filter zurückbleibt, ist es vorteilhaft, wenn das Rad einen gewissen Nachlauf gegenüber dem Brenner aufweist, wenn es also erst ausgeschaltet wird, wenn der Brenner bereits ausgeschaltet ist.

Das Abgas tritt aus dem Gebläserad 5 in den Wirbelraum 16 aus. Die durch die Drehbewegung auszentrifugierten Feststoffpartikel treffen auf die Wandung des Gehäuse-Unterteils 2 und sinken durch ihr eigenes Gewicht nach unten. So gelangen sie in den zylindrischen Beruhigungsraum 17 im Sammelbehälter 21, welcher an den Gehäuse-Unterteil 2 anschliesst. Damit sich die Drehbewegung des Abgases im Wirbelraum 16 nicht bis in den Beruhigungsraum 17 auswirken kann und dadurch die angesammelten Feststoffpartikel ständig aufwirbelt, ist zur Trennung der beiden Räume 16 und 17 das Konusblech 18 vorgesehen. Es lässt einen Durchtritt in den Beruhigungsraum 17 für die abgeschiedenen Partikel frei.

Die Reinigung des Filters bzw. das Entfernen der angesammelten Partikel muss nur in grösseren Zeitabständen erfolgen. Für diesen Zweck ist der Unterteil 2 des Gehäuses abhebbar, während der Sammelbehälter 21 üblicherweise mit dem Zuführungsrohr 1 fest verbunden ist. Nach dem Entfernen des Konusbleches 18 ist der Beruhigungsraum 17 zugänglich und kann gereinigt werden. Dies erfolgt z.B. mit dem Staubsauger, doch sind auch andere Möglichkeiten offen.

Für die Durchführung einer Nassreinigung des Abgases bedarf es nur weniger zusätzlicher Hilfsmittel. Durch das Zuleitungsrohr 19 wird eine Waschflüssigkeit in den Wirkungsbereich des Gebläserades 5 gebracht und zu einem feinen Nebel zerstäubt. Dieser vermischt sich mit dem Abgas, die Feststoffpartikel lagern sich daran an und können dadurch umso leichter ausgeschieden werden. Die wieder niegeschlagene, verschmutzte Waschflüssigkeit rinnt an der Innenseite des Gehäuse-Unterteils 2 nach unten in den Beruhigungsraum 17, von wo sie durch das Ableitungsrohr 20 ablaufen und gegebenenfalls einer externen Aufbereitungsanlage zugeführt werden kann, um sie wieder verwenden zu können.

Es ist naheliegend, dass die Waschflüssigkeit nur während des Betriebes des Gebläserades 5 zugeleitet wird. Dies lässt sich am einfachsten dadurch erreichen, dass die für die Förderung der Waschflüssigkeit meistens vorhandene Pumpe gleichzeitig mit dem Gebläserad ein- und ausgeschaltet wird.

Als Waschflüssigkeit kann gewöhnliches Wasser verwendet werden, dem aber auch noch Zusätze, beispielsweise Reinigungsmittel, beigefügt werden können. Selbstverständlich sind auch andere zweckentsprechende Flüssigkeiten verwendbar. Mit der Wahl geeigneter Mittel ist auch eine Beeinflussugng der chemischen Zusammensetzung des Abgases möglich, z.B. durch die Bindung schädlicher oder giftiger Verbrennungsprodukte.

Die Behandlung eines anderen Gases, gleichgültig ob es flüssige oder Feststoffpartikel mitführt, ist sinngemäss die gleiche, wie sie vorstehend beschrieben wurde.

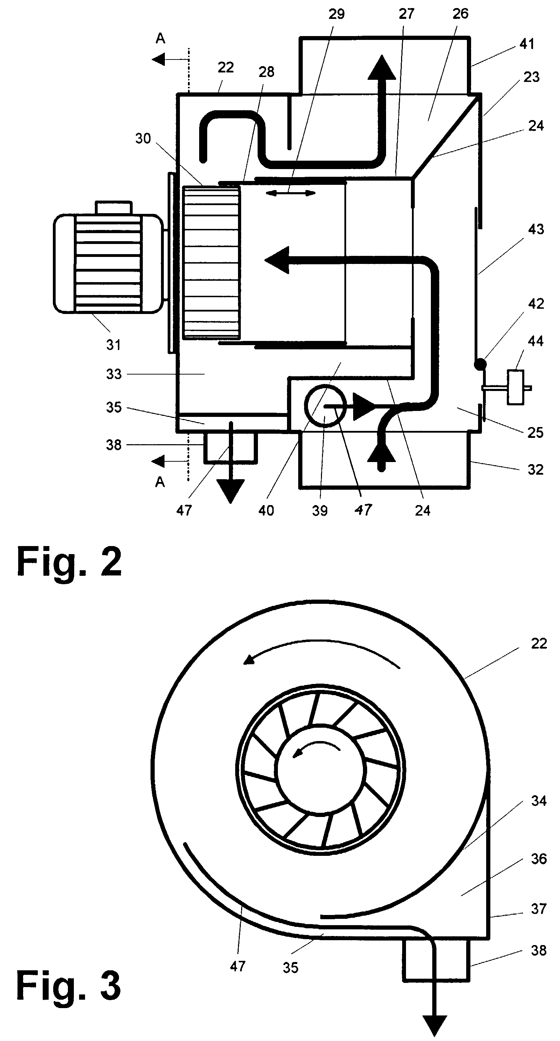

In den Fig.2 und 3 ist eine andere Ausführung eines Filters für die Trockenreinigung der Abgase einer Feuerungsanlage dargestellt, der aber gleicherweise auch anderweitig verwendbar ist. Er ist ebenfalls z.B. mit Briden in die Abgasleitung zwischen Heizkessel und Kamin eingebaut. Die Funktionsweise ist praktisch die gleiche wie jene des Filters nach Fig.1, und auch hier sind die Strömungswege der Abgase durch dicke Linien versinnbildlicht.

Das Gehäuse des Filters besteht im wesentlichen aus dem zylindrischen Teil 22 und dem unmittelbar anschliessenden kubischen Teil 23, dessen Innenraum durch die Abschottwand 24 in den Ansaugraum 25 und den Sammelraum 26 unterteilt ist. Die Abschottwand lässt einen Durchtritt zum Gleitrohr 27 frei, in welchem das Zuführungsrohr 28 verschiebbar angeordnet ist, wie durch den Doppelpfeil 29 versinnbildlicht ist.

In das Zuführungsrohr 28 ist das Radial-Gebläserad 30 teilweise versenkt, welches vom Elektromotor 31 angetrieben wird. Die beiden Endstellungen des verschiebbaren Zuführungsrohres 28 sind derart festgelegt, dass das Gebläserad in dem einen Falle nicht gänzlich frei und im anderen Falle nicht gänzlich eingetaucht ist, also weder ungereinigtes Abgas direkt in den Kamin gelangen könnte noch die Förderung vollständig unterbunden wäre.

Das zu reinigende Abgas strömt durch den rohrförmigen Gehäuseansatz 32 in den Ansaugraum 25 und von da weiter durch das Gleitrohr 27 und das Zuführungsrohr 28 axial zum Gebläserad 30, welches sowohl zur Ansaugung als auch zur Förderung des Gases dient. Beim Ausströmen des Gases aus dem Gebläserad in den Wirbelraum 33 wird ihm eine Drehbewegung erteilt, wodurch unter dem Einfluss der auftretenden Zentrifugalkraft sich die im Gas vorhandenen Partikel gegen die Aussenwand des zylindrischen Gehäuseteils 22 hin konzentrieren.

Über ungefähr einen Quadranten ist der Teil 34 oder Aussenwand des Gehäuseteils 22 spiralig nach innen gebogen (Fig.3), wodurch der Spalt 35 entsteht. Durch diesen Spalt werden die auszentrifugierten Partikel aus dem vorbeigeführten drehenden Gasstrom abgesondert und gelangen so in den Beruhigungsraum 36 im Sammelbehälter 37, von wo sie durch das Ableitungsrohr 38 einer (nicht gezeichneten) Entsorgungsvorrichtung zugeführt werden.

Es ist verständlich, dass bei diesem Vorgang am Spalt 35 ein Rückstau entsteht, sodass vor allem die grösseren, schwereren Partikel abgeschieden werden, während die leichteren Partikel vom Gasstrom weitergeführt werden können. Ein besseres Resultat mit hohem Reinheitsgrad des Abgases wird erzielt, wenn durch den Spalt 35 eine geringe, jedoch mit den Partikeln stark angereicherte Teilmenge 47 des Gases entnommen wird. Der übrige Vorgang ist der gleiche wie oben beschrieben. Nach der Abscheidung der Partikel in einem Feinfilter wird die gereinigte Teilmenge 47 durch den Anschluss 39 wieder in den Ansaugraum 25 rückgeführt.

Das gereinigte Abgas strömt aus dem Wirbelraum 33 durch den Ringspalt 40 in den Sammelraum 26 und weiter durch das Abzugsrohr 41 zum Amin.

Für den rationellen Betrieb eines Heizkessels ist ein konstanter Unterdruck vor dem Kamin sehr wichtig. Durch die Verschiebbarkeit des Zuführungsrohres 28 zur Veränderung der Eintauchtiefe des Gebläserades 30 wird eine genaue Einstellung der Fördermenge sowie des Unterdrukkes im Ansaugraum 25 ermöglicht. Der Unterdruck kann durch einen automatisch wirkenden, einfachen Zugregler in der Aussenwand des kubischen Gehäuseteils 23 überwacht und geregelt werden. Der Regler besteht aus der um die Achse 42 schwenkbaren Luftklappe 43, deren Schliessdruck durch das verschiebbare Gewicht 44 einstellbar ist.

Somit kann der Gasfilter genau auf die Abgasmenge und die Zugverhältnisse der Feuerungsanlage abgestimmt werden. Durch den Zugregler werden allfällige Druckschwankungen zuverlässig ausgeglichen und ein einstellbarer, gleichbleibender Unterdruck nach dem Heizkessel ist gewährleistet.

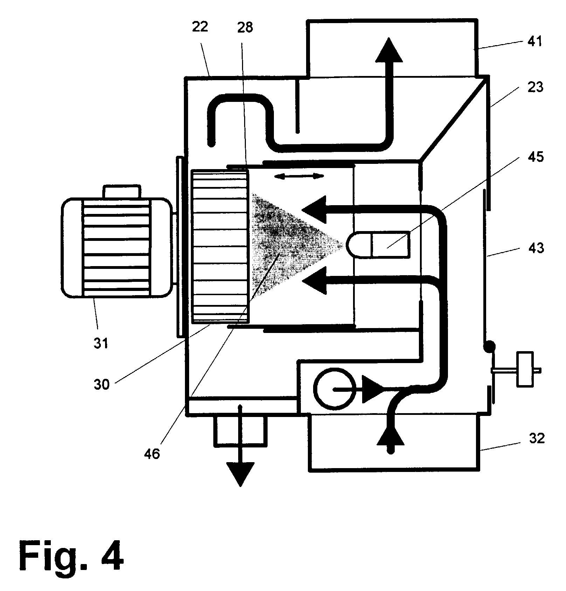

In Fig.4 ist die Nassreinigung eines Gases veranschaulicht. Der Filter ist der gleiche wie jener nach Fig.2, nur ist noch das Zuleitungsrohr 45 für die Waschflüssigkeit, z.B. Wasser, vorgesehen, das in einer Zerstäuberdüse endet. Die austretende, zerstäubte Waschflüssigkeit, welche den Kegel 46 bildet, ist direkt auf die Eintrittsseite des Gebläserades 30 gerichtet.

Der Einbau der erfindungsgemässen Gasfilter ist grundsätzlich in allen Lagen möglich, eine senkrechte oder waagrechte Lage ist jedoch vorzuziehen. Auf jeden Fall ist darauf zu achten, dass bei einer Nassreinigung der natürliche Abfluss der verschmutzten Waschflüssigkeit gewährleistet ist, damit nicht zu ihrer Entfernung aus dem Filter noch zusätzliche Hilfsmittel benötigt werden.

Die sehr kompakte Bauweise der Filter ermöglicht auch deren Einbau in schon vorhandene Anlagen. Dazu ein Zahlenbeispiel aus der Praxis:

Bei einem Rauchrohr-Durchmesser von 180 mm beträgt der benötigte Zwischenraum nur 500 mm.

## Patentansprüche

1. Gasfilter zur Abscheidung von Partikeln, die in einem Gasstrom als Schwebeteilchen mitgeführt werden, insbesondere Feststoffpartikel im Abgas einer Feuerungsanlage, dadurch **gekennzeichnet**, dass das zu reinigende Gas durch ein Zuführungsrohr (1,28) einem teilweise darin versenkten, motorisch angetriebenen Radial-Gebläserad (5,30) axial zuströmt, welches dem in einen Wirbelraum (16,33) ausströmenden Gas eine Drehbewegung erteilt, wodurch die unter der Einwirkung der sich ein-' stellenden Zentrifugalkraft nach aussen geschleuderten Partikel sich entlang der äusseren Wandung des Wirbelraumes konzentrieren und anschliessend zur Sammlung in einen Beruhigungsraum (17,36) gelangen, während das gereinigte Gas durch ein Abzugsrohr (4,41) abströmt.

2. Gasfilter nach Anspruch 1, dadurch gekennzeichnet, dass das Gebläserad (5,30) und das Zuführungsrohr (1,28) relativ zueinander axial verschiebbar sind.

3. Gasfilter nach Anspruch 1, gekennzeichnet durch ein Propellerrad (15), welches, in Strömungsrichtung des Gases gesehen, nach dem Gebläserad (5) angeordnet ist und mit diesem auf einer gemeinsamen Welle (6) sitzt.

4. Gasfilter nach Anspruch 3, dadurch gekennzeichnet, dass die Schaufeln des Propellerrades (15) verstellbar sind.

5. Gasfilter nach Anspruch 1, dadurch gekennzeichnet, dass für eine Nassreinigung des Gases ein Zuleitungsrohr (19,45) für eine Waschflüssigkeit vorgesehen ist, welches im Wirkungsbereich des Gebläserades (5,30) ausmündet, und der Beruhigungsraum (17,36) mit einem Ableitungsrohr (20,38) für die angesammelte, verunreinigte Waschflüssigkeit versehen ist.

6. Gasfilter nach Anspruch 5, dadurch gekennzeichnet, dass eine Pumpe für die Förderung der Waschflüssigkeit durch das Zuleitungsrohr (19,45)vorgesehen ist, die gleichzeitig mit dem Gebläserad (5,30) ein- und ausschaltbar ist.

7. Verfahren zum Betrieb des Gasfilters nach Anspruch 1 für das Abgas einer Feuerungsanlage, dadurch gekennzeichnet, dass das Gebläserad (5,30) läuft, wenn ein Brenner der Feuerungsanlage in Betrieb ist.

8. Verfahren nach Anspruch 7, dadurch gekennzeichnet, dass das Ein- und Ausschalten des Gebläserades (5,30) gleichzeitig mit dem Ein- und Ausschalten des Brenners erfolgt.

9. Verfahren nach Anspruch 7, dadurch gekennzeichnet, dass das Ausschalten des Gebläserades (5,30) mit einem Nachlauf gegenüber dem Ausschalten des Brenners erfolgt.
